Europäisches Patentamt

European Patent Office

Office européen des brevets

(19)

(11) **EP 1 679 248 A1**

(12) **EUROPEAN PATENT APPLICATION**
published in accordance with Art. 158(3) EPC

(43) Date of publication:
**12.07.2006 Bulletin 2006/28**

(51) Int Cl.:
**B62D 6/00** (1985.01)   **B62D 5/04** (1968.09)

(21) Application number: **04788404.4**

(22) Date of filing: **30.09.2004**

(86) International application number:
**PCT/JP2004/014376**

(87) International publication number:
**WO 2005/032915 (14.04.2005 Gazette 2005/15)**

(84) Designated Contracting States:
**DE FR GB**

(30) Priority: **01.10.2003 JP 2003343238**

(71) Applicant: **JTEKT CORPORATION**
**Chuo-ku**
**Osaka-shi**
**Osaka 542-8502 (JP)**

(72) Inventors:
• **NISHIZAKI, Katsutoshi**
**Mie 5180735 (JP)**

• **OYA, Toshiaki**
**Sakai-shi, Osaka 5928342 (JP)**
• **SAKAMAKI, Masahiko**
**Okazaki-shi, Aichi 4442145 (JP)**

(74) Representative: **Sajda, Wolf E. et al**
**MEISSNER, BOLTE & PARTNER**
**Postfach 86 06 24**
**D-8000 München 86 (DE)**

(54) **POWER STEERING DEVICE**

(57)   An electric power steering system causing an electric motor (6) to generate a steering assist force according to a steering torque, includes: a torque sensor (3) for detecting the steering torque; phase compensation means (15a, 15b) acting when a target control value of the electric motor (6) is generated based on an output from the torque sensor (3); and means (15c) for varying the characteristic of the phase compensation means depending upon whether a steering mode is steering with driving or steering without driving, whereby a loadless steering feeling due to phase lag is not encountered during driving even if vibrations during steering without driving are suppressed by a phase compensator.

FIG. 4

**Description**

Technical Field

The present invention relates to an electric power steering system.

Background Art

Conventionally, an electric power steering system has been used, which applies a steering assist force to a steering mechanism by driving an electric motor according to a steering torque applied by a driver to a handle (steering wheel; steering member).
The electric power steering system typically uses a proportional integrator for providing a current control (feedback control) such that a target current may flow through the electric motor, the target current defined based on a steering torque indicated by a torque detection signal from a torque sensor.

Proportional gain and integral gain (hereinafter, collectively referred to as "PI gain") of the proportional integrator may desirably have a higher value from the standpoint of increasing the response of the overall system.
Unfortunately, the electric power steering system includes a mechanical resonant system including a spring element constituted by a torsion bar and an inertial element constituted by the electric motor, the torsion bar interposed in a steering shaft for detecting the steering torque. Therefore, if the PI gain value is increased too much, the system tends to suffer destabilization (or is prone to vibrations) at resonant frequencies of the resonant system, which are near natural frequencies of the mechanical system of the electric power steering system (specifically, in the range of 10 to 25 Hz).

In the conventional system, therefore, the PI gain is not set to such a high value in order to ensure system stabilization at the expense of a high response of the overall system. In addition, the conventional system is provided with a phase compensator for improving phase characteristic in a practical frequency band.
Specifically, the torque sensor applies the torque detection signal to the phase compensator. The phase compensator advances the phase of the torque detection signal, whereby the overall system is improved in the response in the practical frequency band.

The phase compensator has its characteristics so defined as to decrease a resonant-frequency gain in order to prevent the system from becoming a vibratory system.
In defining the characteristics of the phase compensator, therefore, damping at the resonant frequencies need be increased to meet a steer-without-driving assist characteristic of high gain. However, if the phase compensator is characterized by increased damping at the resonant frequencies, the input is highly damped in a wide frequency region with the resonant frequencies located at center. Consequently, damping in a low-frequency region is increased, so that phase lag in the low-frequency region is increased.

Vibrations during steering without driving may be suppressed by employing the phase compensator featuring high damping. During driving, however, the great phase lag in the low-frequency region degrades steering feeling in a low-load region corresponding to a neighborhood of a neutral position of the handle, so that the driver may experience a loadless steering feeling. This loadless steering feeling becomes particularly strong when vehicle speed is high. What is worse, this drawback is even more significant in a high-efficiency electric power steering system featuring low friction.

Japanese Unexamined Patent Publication No. H8(1996)-91236 discloses an electric power steering system including software-type phase compensation means implemented in software. The phase compensation means uses vehicle speed as a parameter for varying its characteristics in correspondence to high vehicle speed, intermediate vehicle speed and low vehicle speed. However, the system disclosed in Japanese Unexamined Patent Publication No. H8 (1996)-91236 provides steering assist whose characteristics are merely varied according to the vehicle speed.
That is, this system does not differentiate between steering assist during steering without driving or when a vehicle speed V is at zero, and steering assist during driving. Hence, the system does not overcome the above problem related to the phase compensator whose characteristics are defined based on the steer-without-driving assist characteristic.

Disclosure of the Invention

One problem to be solved by the invention is that if the vibrations during steering without driving are suppressed by means of the phase compensator, the increased phase lag causes the driver to experience the loadless steering feeling during driving.

According to the invention, an electric power steering system causing an electric motor to generate a steering assist force according to a steering torque, comprises: a torque sensor for detecting the steering torque; phase compensation means acting when a target control value of the electric motor is generated based on an output from the torque sensor; and means for varying the characteristics of the phase compensation means depending upon whether a steering mode is steering with driving or steering without driving.

The phase compensation means differentiates between the steering assist during steering without driving and the steering assist during driving and has its characteristics varied accordingly. This approach permits the steering assist during driving to be characterized by relatively small damping in the low-frequency region, even though the steering assist for steering without driving is characterized by the relatively higher damping in the low-frequency region in order to suppress the vibrations. Thus, the loadless steering feeling during driving may be lessened.

It is preferred that the phase compensation means includes a first phase compensator for steering with driving and a second phase compensator for steering without driving, and that the means for varying the characteristics of the phase compensation means comprises means for making changeover of the phase compensators in order that the target control value is generated by means of the first phase compensator in the case of steering with driving, and that the target control value is generated by means of the second phase compensator in the case of steering without driving. A proper steering feeling may be provided easily by switching the phase compensator between steering with driving and steering without driving.

The phase compensation means includes the first phase compensator dedicated to steering with driving and arranged to have a damping peak at a predetermined frequency, and the second phase compensator dedicated to steering without driving and arranged to have a damping peak at a predetermined frequency, whereas the damping peak of the second phase compensator is on a lower frequency side than the damping peak of the first phase compensator. This constitution is adapted to suppress the vibrations during steering without driving and to lessen the loadless steering feeling experienced during driving.

It is preferred that the phase compensation means is represented by a transfer function $G_C(s)$ of the following formula, and that parameters $\zeta_2$ and $\omega_2$ of the transfer function $G_C(s)$ are set to values to reduce or cancel a peak of a gain characteristic of an open-loop transfer function for torque of the electric power steering system, the peak appearing based on natural vibrations of a mechanical system and a counter-electromotive force of the motor:

$$G_C(s) = (s^2 + 2\zeta_2\omega_2 s + \omega_2{}^2)/(s^2 + 2\zeta_1\omega_1 s + \omega_1{}^2),$$

where $\zeta_1$ denotes a compensated damping coefficient; $\zeta_2$ denotes a damping coefficient of a compensated system; $\omega_1$ denotes a compensated natural angular frequency; and $\omega_2$ denotes a natural angular frequency of the compensated system, all these symbols representing the parameters of the function $G_C(s)$.

The above constitution is adapted to ensure stability and to improve response, because the phase compensation means reduces or cancels the peak of the gain characteristic of the open-loop transfer function for torque, the peak appearing based on the natural vibrations of the mechanical system and the counter-electromotive force of the motor. In order to limit an input/output steady-state gain to 1, the phase compensation means may also take another mode represented by the following formula where the function $G_C(s)$ is multiplied by a gain correction coefficient $\omega_1{}^2/\omega_2{}^2$:

$$G_C(s) = \omega_1{}^2(s^2 + 2\zeta_2\omega_2 s + \omega_2{}^2)/\{\omega_2{}^2(s^2 + 2\zeta_1\omega_1 s + \omega_1{}^2)\}.$$

It is further preferred that the parameters $\zeta_1$ and $\zeta_2$ of the transfer function $G_C(s)$ of the phase compensation means are defined to satisfy the following expressions:

$$2^{-1/2} \leq \zeta_1 \leq 1,$$

$$0 < \zeta_2 < 2^{-1/2}.$$

may ensure stability and improve the response.

It is preferred that the parameters $\omega_1$ and $\omega_2$ of the transfer function $G_C(s)$ of the phase compensation means are defined to satisfy the following equation and to take values near $2\pi \times f_P$, provided that $f_P$ denotes a frequency of the peak of the gain characteristic of the open-loop transfer function for torque:

$$\omega_1 = \omega_2.$$

One design parameter of the phase compensation is deleted by defining the relation $\omega_1 = \omega_2$. Furthermore, the parameter $\omega_1$ as the compensated natural angular frequency takes a value near $2\pi \times f_P$, whereby destabilization due to the natural vibrations of the mechanical system is obviated. Hence, the phase compensation design may be facilitated, while the control system may be even further stabilized and improved in response.

It is preferred that the parameter $\omega_1$ of the transfer function $G_C(s)$ of the phase compensation means is defined to satisfy the following expression:

$$\omega_1 < \omega_m,$$

where $\omega_m$ denotes an angular frequency of the natural vibrations of the mechanical system.

Since the parameter $\omega_1$ as the compensated natural angular frequency is smaller than the angular frequency $\omega_m$ of the natural vibrations of the mechanical system, the control system is prevented from being destabilized by the natural vibrations of the mechanical system. Thus, the control system may more reliably maintain stability and achieve the improved response.

Brief Description of the Drawings

FIG. 1 is a Bode diagram showing a characteristic of an open-loop transfer function for torque of an electric power steering system, as determined by simulation, the diagram showing cases where a non-interactive control is provided and where the non-interactive control is not provided;

FIG. 2 is a Bode diagram showing cases where the electric power steering system is not subjected to phase compensation and where the system is subjected to the phase compensation;
FIG. 3 is a schematic diagram showing an arrangement of the electric power steering system along with a vehicle arrangement associated therewith;
FIG. 4 is a block diagram showing an arrangement of a principal part of the electric power steering system; and
FIG. 5 is a Bode diagram of a phase compensator.

Description of Reference Characters

3 = Torque sensor
6 = Electric motor
15 = Phase compensator portion
15a = First phase compensator (phase compensation means)
15b = Second phase compensator (phase compensation means)
15c = Changeover switch (means for varying characteristics)

Best Mode for Carrying Out the Invention

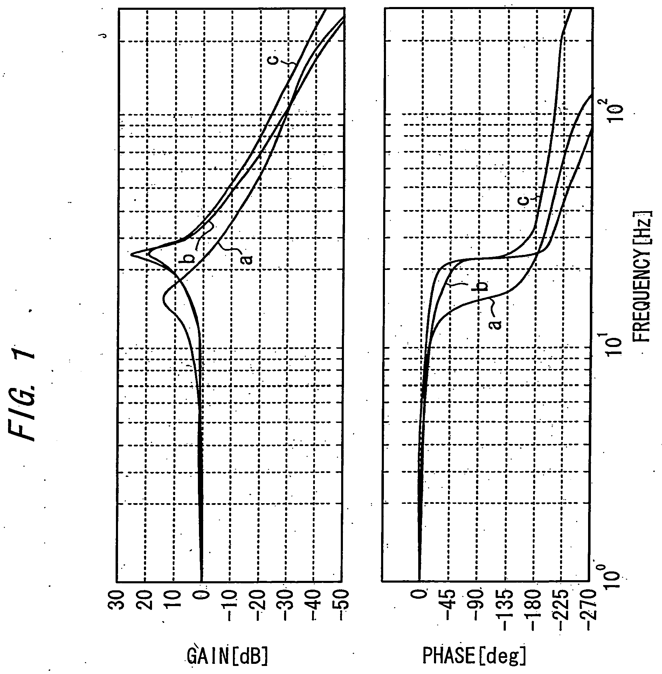

First, a basic study for phase compensation design will be described.
The aforementioned conventional technique related to the phase compensation in the control design for the electric power steering system has been proposed as a measure for compensating for a peak of natural vibration frequencies of a mechanical system (hereinafter, referred to as "mechanical-system peak"), which are mechanical resonant frequencies. However, the technique does not consider an influence of a counter-electromotive force of a motor.
According to the conventional technique, a peak of a system gain characteristic of the electric power steering system or of a gain characteristic of open-loop transfer function for torque (hereinafter, referred to as "system peak") is regarded as the peak of the mechanical system. However, the results of the following simulation revealed that the counter-electromotive force in the motor exerts such a significant influence on the characteristics of the system that the mechanical-system peak and the peak of the overall system (system peak) have different frequencies.
Referring to FIG. 1, description is made on this fact. It is noted that the term "open-loop transfer function for torque", as used herein, means a transfer function representing a relation between an input defined by a target value of torque to be generated by the motor and an output defined by a torque (hereinafter, referred to "motor torque") actually generated by the motor with a fixed steering angle (for example, with the handle fixed to a neutral position).
The target value of torque to be generated by the motor corresponds to a target current value for a current control system, whereas the motor torque corresponds to a value of current actually flowing through the motor. Hence, the open-loop transfer function for torque is equivalent to a transfer function having an input defined by the target current value and an output defined by the current actually flowing through the motor in the electric power steering system with the fixed steering angle.

FIG. 1 is a Bode diagram (gain plot and phase plot) showing the open-loop transfer function for torque of the electric power steering system employing a brushless motor, as obtained by a simulation (numerical experiment). The Bode diagram shows a case where a non-interactive control is provided in a control system for d-axis current and q-axis current of the motor, and a case where the non-interactive control is not provided. The influence of the counter-electromotive force can be eliminated by providing the non-interactive control, so that the characteristics of the mechanical system may be obtained. The conditions of the simulation are listed as below:

Inertia on motor-output side: $Im = 7.89 \times 10^{-5}[N \cdot m \cdot s^2/rad]$
Viscosity on motor output side: $Cm = 1.39 \times 10^{-3}[N \cdot m \cdot s/rad]$
Reduction ratio of speed reducer: $n = 9.7$
Elasticity of torsion bar: $K = 162.95[N \cdot m/rad]$
Toque constant of motor: $K_T = 5.12 \times 10^{-2}[N \cdot m/A]$
Inductance of motor: $L = 9.2 \times 10^{-5}[H]$
Resistance of motor: $R = 6.1 \times 10^{-2}[\Omega]$
Number of motor-pole pairs: $P = 4$
Constant of counter-electromotive force: $\varphi fp = 4.93 \times 10^{-2}[V \cdot s/rad]$
Proportional gain of PI controller: $Kp = L \times (2\pi \times 75)$
Integral gain of PI controller: $Ki = R \times (2\pi \times 75)$

Let us take note of the gain plot of FIG. 1. In FIG. 1, a curve 'a' represents a gain characteristic of a case where the non-interactive control is not provided. The curve has a peak frequency of about 17 Hz, which is a frequency of the system peak (hereinafter, referred to "system peak frequency" or simply to "peak frequency", and represented by a symbol "fp"). A curve 'b' represents a gain characteristic of a case where the non-interactive control is provided. The curve has a peak frequency fp of about 22 Hz. A curve 'c' represents a gain characteristic only related to elasticity/inertia, which is a gain characteristic of a mechanical element alone. The curve also has a peak frequency of about 22 Hz. Thus, the peak frequency of the mechanical system (hereinafter, referred to as "mechanical-system peak frequency" and represented by a symbol "fm") is about 22 Hz. This indicates that the system peak has a different frequency from that of the mechanical-system peak.

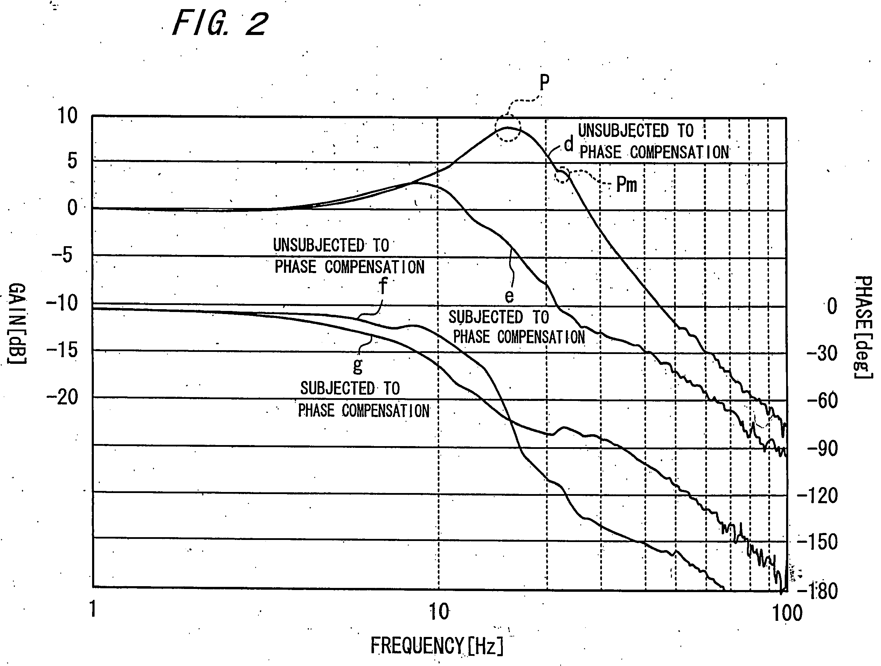

Next, let us take note of FIG. 2 showing a gain characteristic of the open-loop transfer function for torque of the above electric power steering system subjected to phase compensation. In FIG. 2, a curve 'd' represents a gain characteristic of a case where the phase compensation is not provided. The curve 'd' corresponds to the curve 'a' in FIG. 1 (which represents the gain characteristic of the case where the non-interactive control is not provided). A peak P of the gain characteristic represented by the curve 'd' reflects the influence of the counter-electromotive force, as described above. The peak P is at a lower frequency than a mechanical-system peak Pm (which corresponds to the peak of the curve 'b' or 'c' in FIG. 1) is.

Since the conventional technique does not consider the influence of the counter-electromotive force, the above peak P is regarded as the mechanical-system peak Pm and the phase compensation is so provided as to cancel the peak P. Hence, some phase compensator design may have a drawback that the overall system is destabilized (prone to vibrations) due to the influence of the mechanical-system peak Pm even after the phase compensation is provided. In the electric power steering system according to the embodiment, therefore, the phase compensator is designed with consideration given to the point that the gain peak P of the overall system differs from the mechanical-system peak Pm due to the influence of the counter-electromotive force.

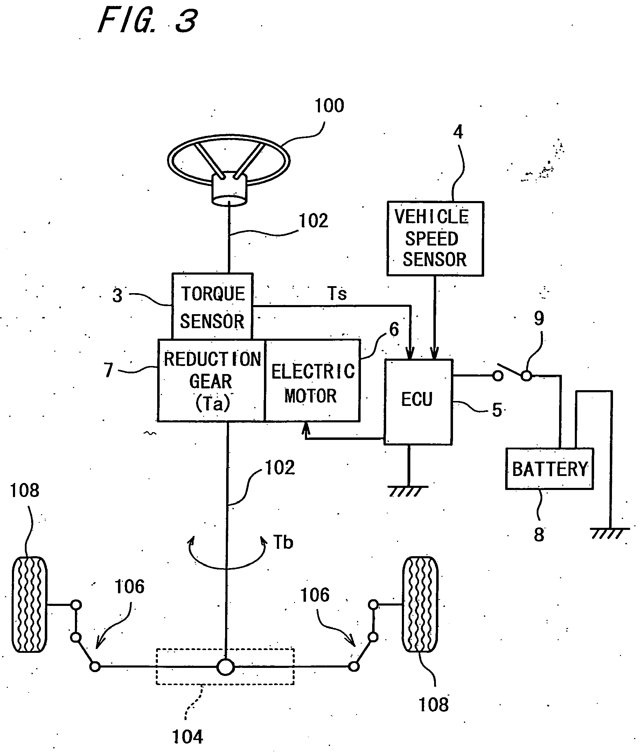

FIG. 3 shows an arrangement of the electric power steering system along with a vehicle arrangement associated therewith. The electric power steering system includes: a steering shaft 102 having one end secured to a handle 100 (steering wheel) as a steering member; and a rack and pinion mechanism 104 (rack-and-pinion steering gear) connected to the other end of the steering shaft 102.

When the steering shaft 102 is rotated, the rotation thereof is converted into a reciprocal motion of a rack shaft by means of the rack and pinion mechanism 104. Opposite ends of the rack shaft are coupled with road wheels 108 via coupling members 106 each including a tie rod and a knuckle arm. The directions of the road wheels 108 are changed according to the reciprocal motion of the rack shaft. Friction in the rack-and-pinion steering gear is reduced to a small value of 0.6 Nm or less in terms of torque around the steering shaft.

The electric power steering system further includes: a torque sensor 3 for detecting a steering torque applied to the steering shaft 102 by operating the handle 100; an electric motor 6 (brushless motor) for generating a steering assist force; a reduction gear 7 for transmitting the steering assist force, as generated by the motor 6, to the steering shaft 102; and an electronic control unit 5 (ECU) powered by an onboard battery 8 for drivably controlling the motor 6 based on sensor signals from the torque sensor 3 and the like. Friction in the reduction gear 7 is set to a small value of 0.3 Nm or less, or preferably 0.2 Nm or less in terms of the torque around the steering shaft.

The system of the embodiment is designed to reduce the friction values of the steering gear 104 and the reduction gear 7 as principal frictional elements, so that the system as a whole features low friction and high efficiency. A specific value of the sum of the friction value of the steering gear 104 and that of the reduction gear 7 is preferably 1.0 Nm or less, or more preferably 0.9 Nm or less.

When a driver operates the handle 100 of a vehicle equipped with such an electric power steering system, a steering torque associated with the handle operation is detected by the torque sensor 3. Based on a detected value of the steering torque $T_S$, a vehicle speed and the like, the ECU 5 drives the motor 6 which, in turn, generates a steering assist force.

The steering assist force is applied to the steering shaft 102 via the reduction gear 7 whereby load on the driver operating the handle is reduced. Specifically, a sum of the steering torque Ts applied by operating the handle and the steering assist force Ta generated by the motor 6 is applied to the steering shaft 102 as an output torque Tb, whereby the vehicle is steered.

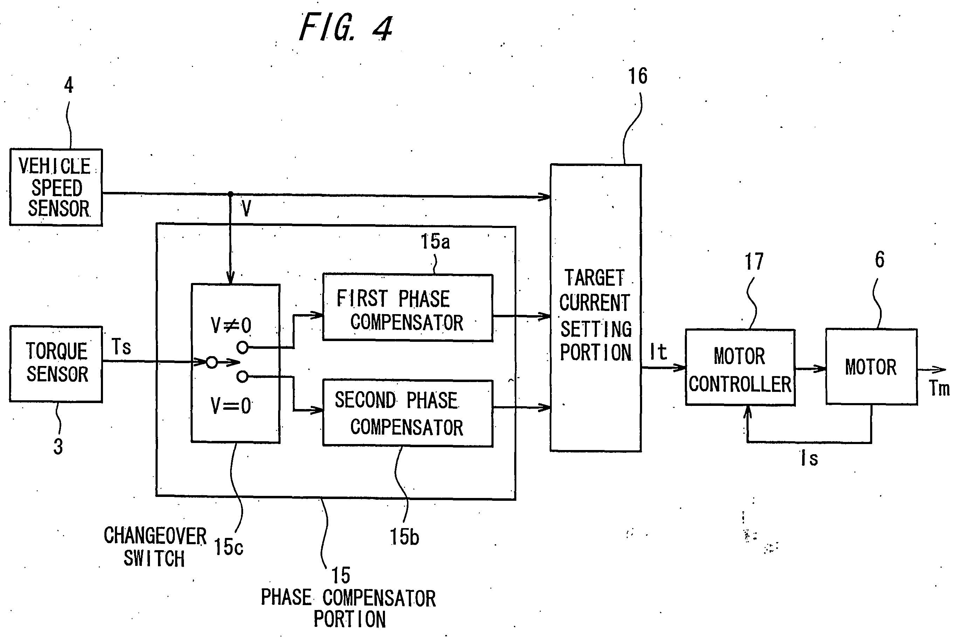

FIG. 4 is a block diagram showing an arrangement of principal parts of the electric power steering system according to the invention, the principal parts centered on the ECU 5 as the controller. The electric power steering system includes the ECU 5 for drivably controlling the electric motor 6, as described above. The ECU 5 is supplied with output signals from the torque sensor 3 for detecting the steering torque applied to the handle 100 and from a vehicle speed sensor 4 for detecting a vehicle speed.

The ECU 5 has an arrangement including a microcomputer, which executes programs thereby bringing plural function processors into action. The plural function processors include: a phase compensator portion 15 for providing phase compensation by filtering a torque signal which is the output signal from the torque sensor 3; a target current setting portion 16 for setting a target current based on the torque signal processed by the phase compensator portion 15 and a vehicle speed signal outputted from the vehicle speed sensor 4; and a motor controller 17 for providing feedback control of the electric motor 6 based on the target current set by the target current setting portion 16.

The torque sensor 3 detects the steering torque $T_S$ applied by operating the handle 100. Specifically, a torsion bar is interposed in the steering shaft 102 between its handle-side portion and its portion which is applied with a steering assist force $T_a$ via the reduction gear 7. The torque sensor 3 senses a quantity of torsion of the torsion bar, thereby detecting the steering torque $T_S$. A value of the steering torque $T_S$ thus detected is outputted from the torque sensor 3 as a steering torque detection signal (hereinafter, also represented by the symbol "$T_S$"), which is inputted to the phase compensator portion 15 of the ECU 5.

The phase compensator portion 15 subjects the steering torque detection signal $T_S$ to a filtering process for phase compensation and then, outputs the processed signal to the target current setting portion 16. The phase compensator portion 15 includes: a first phase compensator 15a and a second phase compensator 15b individually having different characteristics; and a changeover switch 15c for selectively applying the steering torque detection signal $T_S$ to the first phase compensator 15a or the second phase compensator 15b.

The changeover switch 15c (means for varying the characteristics of the phase compensator) is supplied with a vehicle speed signal V from the vehicle speed sensor 4. The changeover switch selects either of the phase compensators 15a, 15b (phase compensation means) based on whether the signal indicates steering with driving ($V \neq 0$) or steering without driving ($V = 0$). In the case of steering with driving, the changeover switch 15c selects the fist phase compensator 15a for phase compensation during steering with driving. Hence, the steering torque detection signal $T_S$ is applied to the first phase compensator 15a, which applies an output of the first phase compensator 15a to the target current setting portion 16.

In the case of steering without driving, on the other hand, the second phase compensator 15b for phase compensation during steering without driving is selected. Thus, the steering torque detection signal $T_S$ is applied to the second phase compensator 15b, which applies an output of the second phase compensator 15b to the target current setting portion 16.

Based on the filtered signal from the first phase compensator 15a or the second phase compensator 15b, and the above vehicle speed signal V, the target current setting portion 16 calculates a target value of current to be supplied to the motor 6 and outputs the calculated value as a target current value $I_t$.

The motor controller 17 receives the target current value $I_t$ outputted from the target current setting portion 16 and provides current control such as to match a value $I_s$ of current actually flowing through the motor 6 with the target current value It. Provided as the current control is, for example, a proportional-plus-integral control wherein such a voltage command value as to cancel a difference between the target current value It and the actual current value $I_s$ is calculated, the command value representing a voltage to be applied to the motor 6. The motor controller 17 applies a voltage to the motor 6 according to the voltage command value.

The motor 6 generates a torque Tm, as the steering assist force, according to a current flow therethrough caused by the applied voltage. The torque Tm, as a steering assist force Ta, is transmitted to the steering shaft 102 via the reduction gear 7.

The phase compensator portion 15 is described as below.

It is known that in a practical frequency band, a frequency characteristic of the open-loop transfer function for torque, which represents the characteristic of the overall electric power steering system, can be approximated using a transfer function of a second-order lag system. FIG. 2 is a Bode diagram showing cases where the phase compensation is not provided and where the phase compensation is provided. In FIG. 2, as well, a characteristic of the transfer function of the second-order lag system can be observed.

First, description is made on the case where the phase compensation is not provided. The curve 'd' represents a gain characteristic of the case where the phase compensation is not provided. It is seen from the curve 'd' that the open-loop transfer function for torque of the overall system is poor in stability as indicated by the gain characteristic which has a peak frequency fp of about 17 Hz, which is corresponded by a gain of about 9 dB. As seen from a curve 'f' representing a characteristic of the case where the phase compensation is not provided, phase lag is increased in a frequency range of 20 Hz to 30 Hz. The following is a general formula of a transfer function G(s) of the second-order lag system:

$$G(s) = \omega_n^2 / (s^2 + 2\zeta_2\omega_n s + \omega_n^2),$$

where s denotes a Laplace operator; $\zeta_2$ denotes a damping coefficient; and $\omega_n$ denotes a natural angular frequency.

The transfer function $G_C(s)$ of the phase compensator 15a, 15b should be so defined as to cancel the system peak P which is the peak of the gain characteristic of the transfer function G(s) of the above second-order lag system representing a compensated system. The embodiment determines the transfer function G(s) based on the following formula:

$$G_C(s) = (s^2 + 2\zeta_2\omega_2 s + \omega_2^2)/(s^2 + 2\zeta_1\omega_1 s + \omega_1^2),$$

where s denotes the Laplace operator; $\zeta_1$ denotes a compensated damping coefficient; $\zeta_2$ denotes a damping coefficient of the compensated system; $\omega_1$ denotes a compensated natural angular frequency; and $\omega_2$ denotes a natural angular frequency of the compensated system. The embodiment provides the electric power steering system including the phase compensator whose parameters are defined effectively from the standpoint of realizing a control system having a desired frequency characteristic.

In a case where the gain characteristic of the compensated system contains a peak, it is known that the parameter $\zeta_2$ in the formula representing the transfer function G(s) of the system takes a value of $\zeta_2 < 2^{-1/2}$. Therefore, adequate phase compensation is not provided if the value of the parameter $\zeta_2$ of the formula representing the transfer function G(s) of the phase compensator is selected from the range represented by the expression: $2^{-1/2} < \zeta_2 < 1$. As a result, the electric power steering system tends to work as an instable control system (vibratory system).

Therefore, the value of the parameter $\zeta_2$ of the transfer function of the phase compensator should be selected from a range excluding the range expressed as:

$$2^{-1/2} < \zeta_2 < 1.$$

If the value of the damping coefficient $\zeta_1$ compensated by the phase compensator portion 15 is selected from the range represented by the expression:

$0 < \zeta_1 < 2^{-1/2}$, the compensated gain characteristic contains a peak so that the compensated control system is prone to instable operation.

Therefore, the value of the parameter $\zeta_1$ of the transfer function of the phase compensator should be selected from a range excluding the range expressed as:

$$0 < \zeta_1 < 2^{-1/2}.$$

Hence, the embodiment defines the parameters $\zeta_1$ and $\zeta_2$ of the phase compensators 15a, 15b having the transfer function G(s) in a manner to satisfy the following expressions:

$$2^{-1/2} \leq \zeta_1 \leq 1,$$

and

$$0 < \zeta_2 < 2^{-1/2}.$$

By making such definitions, the embodiment can achieve an improved response while ensuring stability.

The peak frequency fp of the overall system differs from the mechanical-system peak frequency fm, which is higher than the system peak frequency fp. In order to prevent the system from working unsteadily (vibratory system) in a frequency band near $\omega_1$, the angular frequency $\omega_m$ of the natural vibrations of the mechanical system must be adequately decreased in gain. If $\omega_m < \omega_1$, $\omega_m$ is not adequately decreased in gain so that the system is prone to vibrations in the frequency band near $\omega_1$. For effective compensation for the mechanical-system peak, the parameter $\omega_1$ of the phase compensator may preferably be defined to satisfy the following expression:

$$\omega_m > \omega_1.$$

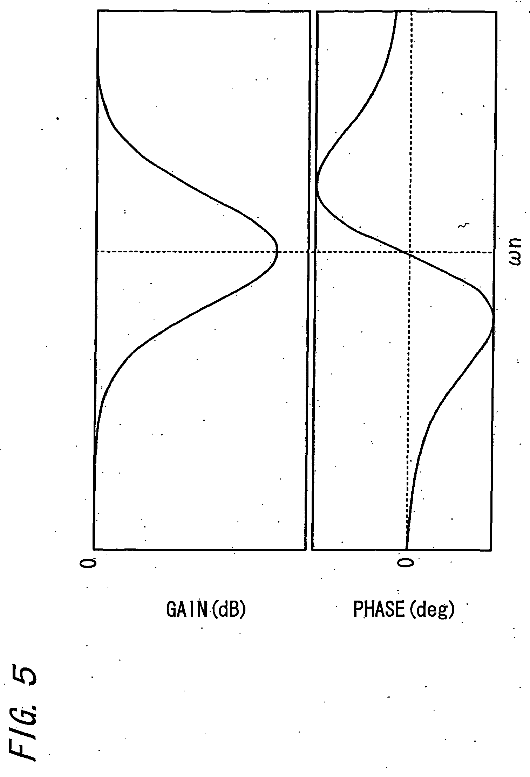

If the parameters $\zeta_1$, $\zeta_2$ and $\omega_1$ are defined as described above, the electric power steering system may have characteristics which include a gain characteristic represented by a curve 'e' in FIG. 2 and a phase characteristic represented by a curve 'g' in FIG. 2. FIG. 5 is a Bode diagram showing the characteristics of the phase compensator. It is apparent from these figures that the phase compensation based on the above definitions achieves a notable reduction of the gain peak value and decreases phase lag near 20 Hz.

The phase compensator, as described above, facilitates the phase compensation design and ensures the stability of the control system. In addition, the phase compensator improves the response of the system so as to provide the open-loop transfer function for torque, which has a desired frequency characteristic.

In the light of implementing the preferred compensator design, the parameters $\omega_1$ and $\omega_2$ of the transfer function $G_C(s)$ of the phase compensator are first considered. The parameter $\omega_1$ represents the compensated natural angular frequency or, in other words, the target natural angular frequency. That $\omega_1$ and $\omega_2$ are of different values means that the natural angular frequency of the compensation system does not achieve the target natural angular frequency. In the phase compensation of the control system of the electric power steering system, the compensation system may desirably have a natural angular frequency equal to the target natural angular frequency. Hence, definition is made as $\omega_1 = \omega_2$. Thus, $\omega_n = \omega_1 = \omega_2$ is deduced, which will be hereinafter referred to as "natural angular frequency of compensator". If the compensated natural angular frequency is defined as $\omega_n = 2\pi \cdot fp$ based on the peak frequency fp of the gain characteristic of the open-loop transfer function for torque of the overall system, the system destabilization (prone to vibrations) due to the influence of the mechanical-system peak Pm may be obviated. The compensated natural angular frequency may preferably be defined as $\omega_m > \omega_1$ such that the overall system may not become vibratory due to the influence of the mechanical-system peak Pm, as described above.

Hence, the parameter of the transfer function of the phase compensator may more preferably be defined to satisfy the following expressions:

$$\omega_m > \omega_1 = \omega_2 = \omega_n,$$

$$\omega_n = 2\pi \cdot fp,$$

$$2^{-1/2} \leq \zeta_1 \leq 1,$$

$$0 < \zeta_2 < 2^{-1/2}.$$

Thus, one design parameter is deleted by setting $\omega_1$ and $\omega_2$ to the same value, so that both the response and the stability may be satisfied effectively and easily.

The parameter fp of $\omega_n = 2\pi \cdot$fp (which will hereinafter be represented by a symbol "fn" for differentiation from the system peak frequency fp and be referred to as "natural frequency of compensator") need not have the same value as that of the peak frequency fp but may a value near the peak frequency fp to serve well the practical use. Hence, the natural angular frequency of compensator $\omega_n$ may be defined by the following formula:

$$2\pi\times(\text{fp-}\alpha) \leq \omega_n \leq 2\pi\times(\text{fp+}\beta).$$

According to the embodiment, both the first phase compensator 15a for steering with driving and the second phase compensator 15b for steering without driving have the transfer functions represented by the above formula $G_C$(s). While the first phase compensator 15a and the second phase compensator 15b have mutually different values of the parameters of $G_C$(s), these values are selected from the above ranges.

For instance, in a case where $\omega_n = 2\pi\times21$Hz, $\zeta_1 = 1$, $\zeta_2 = 0.2$ are selected as the parameters of the first phase compensator 15a for steering with driving, $\omega_n = 2\pi\times20$Hz, $\zeta_1 = 1$, $\zeta_2 = 0.2$ may be selected as the parameters of the second phase compensator 15b for steering without driving, whereby these phase compensators 15a, 15b may have different characteristics.

In the above example, the value of $\omega_n$ of the second phase compensator 15b for steering without driving is smaller than that of the first phase compensator 15a and hence, a damping peak of the second phase compensator 15b is on a lower frequency side than a damping peak of the first phase compensator 15a. As a result, the second phase compensator 15b has higher damping in a low frequency region as a whole.

On the other hand, the value $\omega_n$ of the first phase compensator 15a is greater than that of the second phase compensator 15b, so that damping and phase lag in the low frequency region are relatively small during steering with driving. Thus, the loadless steering feeling may be lessened.

The first phase compensator 15a may be further varied in the parameter values according to the vehicle speed. For instance, the parameters may be set to

$\omega_n = 2\pi\times21$Hz, $\zeta_1 = 1$, $\zeta_2 = 0.2$ when the vehicle speed is low, whereas the parameters may be set to $\omega_n = 2\pi\times23$Hz, $\zeta_1 = 1$, $\zeta_2 = 0.3$ when the vehicle speed is medium or above. The damping peak may be shifted to a high frequency region by increasing the value of $\omega_n$, whereas the attenuance may be decreased by increasing the value of $\zeta_2$. Thus, the steering feeling may be improved even further.

According to the embodiment, the first phase compensator 15a and the second phase compensator 15b are discretely provided as the phase compensator and are switched by means of the changeover switch 15c. Alternatively, the two phase compensators may be replaced by a single phase compensator, while the values of the parameters ($\omega_n$, $\zeta_1$, $\zeta_2$) of the $G_C$(s) thereof may be varied depending upon whether the steering mode is steering with driving or steering without driving.

According to the invention, the transfer function and the characteristics of the phase compensator are not limited to the above.

**Claims**

1. An electric power steering system causing an electric motor to generate a steering assist force according to a steering torque, comprising:

   a torque sensor for detecting the steering torque;
   phase compensation means acting when a target control value of the electric motor is generated based on an output from the torque sensor; and
   means for varying the characteristics of the phase compensation means depending upon whether a steering mode is steering with driving or steering without driving.

2. An electric power steering system according to Claim 1, wherein the phase compensation means includes a first phase compensator for steering with driving and a second phase compensator for steering without driving, and

wherein the means for varying the characteristics of the phase compensation means comprises means for making changeover of the phase compensators in order that the target control value is generated by means of the first phase compensator in the case of steering with driving and that the target control value is generated by means of the second phase compensator in the case of steering without driving.

3. An electric power steering system according to Claim 1, wherein the phase compensation means includes a first phase compensator dedicated to steering with driving and arranged to have a damping peak at a predetermined frequency, and a second phase compensator dedicated to steering without driving and arranged to have a damping peak at a predetermined frequency, and

   wherein the damping peak of the second phase compensator is on a lower frequency side than the damping peak of the first phase compensator.

4. An electric power steering system according to Claim 1, wherein the phase compensation means is represented by a transfer function $G_C(s)$ of the following formula, and parameters $\zeta_2$ and $\omega_2$ of the transfer function $G_C(s)$ are set to values to reduce or cancel a peak of a gain characteristic of an open-loop transfer function for torque of the electric power steering system, the peak appearing based on natural vibrations of a mechanical system and a counter-electromotive force of the motor:

$$G_C(s) = (s^2 + 2\zeta_2\omega_2 s + \omega_2^2)/(s^2 + 2\zeta_1\omega_1 s + \omega_1^2),$$

where $\zeta_1$ denotes a compensated damping coefficient; $\zeta_2$ denotes a damping coefficient of a compensated system; $\omega_1$ denotes a compensated natural angular frequency; and $\omega_2$ denotes a natural angular frequency of the compensated system, all these symbols representing the parameters of the function $G_C(s)$.

FIG. 1

GAIN[dB]

FREQUENCY [Hz]

PHASE [deg]

EP 1 679 248 A1

FIG. 2

GAIN[dB]

PHASE[deg]

FREQUENCY[Hz]

P

UNSUBJECTED TO
PHASE COMPENSATION

d

Pm

UNSUBJECTED TO
PHASE COMPENSATION
f

e

SUBJECTED TO
PHASE COMPENSATION

g

SUBJECTED TO
PHASE COMPENSATION

EP 1 679 248 A1

## FIG. 3

## FIG. 4

EP 1 679 248 A1

EP 1 679 248 A1

# FIG. 5

GAIN(dB)

PHASE (deg)

0

ωn

## INTERNATIONAL SEARCH REPORT

| International application No. |
| --- |
| PCT/JP2004/014376 |

**A. CLASSIFICATION OF SUBJECT MATTER**
    Int.Cl[7] B62D6/00, B62D5/04

According to International Patent Classification (IPC) or to both national classification and IPC

**B. FIELDS SEARCHED**

Minimum documentation searched (classification system followed by classification symbols)
    Int.Cl[7] B62D6/00, B62D5/04

Documentation searched other than minimum documentation to the extent that such documents are included in the fields searched
    Jitsuyo Shinan Koho          1922-1996   Jitsuyo Shinan Toroku Koho   1996-2004
    Kokai Jitsuyo Shinan Koho    1971-2004   Toroku Jitsuyo Shinan Koho   1994-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 2002-29433 A  (Mitsubishi Electric Corp.),<br>29 January, 2002 (29.01.02),<br>Full text; Figs. 1 to 8<br>& DE 10119968 A1 | 1,2<br>3<br>4 |
| Y<br>A | JP 2000-168600 A  (Mitsubishi Electric Corp.),<br>20 June, 2000 (20.06.00),<br>Par. Nos. [0055] to [0059]; Figs. 1 to 16<br>& US 6161068 A1          & EP 1006042 A | 1-3<br>4 |

| ☐ Further documents are listed in the continuation of Box C. | ☐ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    05 November, 2004 (05.11.04) | Date of mailing of the international search report<br>    22 November, 2004 (22.11.04) |
| --- | --- |
| Name and mailing address of the ISA/<br>    Japanese Patent Office | Authorized officer |
| Facsimile No. | Telephone No. |

Form PCT/ISA/210 (second sheet) (January 2004)